Europäisches Patentamt

European Patent Office

Office européen des brevets

(19)

(11) Publication number: **0 013 022**
**B1**

(12) **EUROPEAN PATENT SPECIFICATION**

(45) Date of publication of patent specification: **28.03.84**

(51) Int. Cl.³: **G 01 N 27/12**

(21) Application number: **79105349.9**

(22) Date of filing: **22.12.79**

(54) **Humidity detecting apparatus using a humidity detecting resistor ceramic element.**

(30) Priority: **26.12.78 JP 165743/78**
**31.07.79 JP 99177/79**

(43) Date of publication of application:
**09.07.80 Bulletin 80/14**

(45) Publication of the grant of the patent:
**28.03.84 Bulletin 84/13**

(84) Designated Contracting States:
**DE FR GB**

(56) References cited:
**FR - A - 2 325 161**
**FR - A - 2 336 777**
**GB - A - 527 686**
**GB - A - 1 422 182**
**US - A - 3 961 301**

(73) Proprietor: **Matsushita Electric Industrial Co., Ltd.**
**1006, Oaza Kadoma**
**Kadoma-shi Osaka-fu, 571 (JP)**

(72) Inventor: **Terada, Jiro**
**4-23-8, Kohzu**
**Katano-shi Osaka-fu (JP)**
Inventor: **Nitta, Tsuneharu**
**2-15-8, Myokenzaka**
**Katano-shi Osaka-fu (JP)**

(74) Representative: **Eisenführ & Speiser**
**Martinistrasse 24**
**D-2800 Bremen 1 (DE)**

Courier Press, Leamington Spa, England.

Humidity detecting apparatus using a humidity detecting resistor ceramic element

The present invention relates to a humidity detecting apparatus comprising a humidity detecting resistor element comprising two measuring electrodes, a resistance heating unit covering a substantial part of a major surface of the element and a power source for supplying electric power to said resistance heating unit.

At a time when the humidity detecting characteristics of the humidity detecting resistor have decayed due to the various gases (oil components), it is heated and cleaned and can be used semipermanently. The heating system in the heating and cleaning operations is of the thermal radiation type wherein the humidity detecting resistor is heated through the radiated heat from a nearby-disposed resistance heating unit or of the heat conduction type wherein a humidity detecting resistor is provided on the resistance heating unit through an insulating substrate to conduct the heat from the resistance heating unit through the insulating substrate to the humidity detecting resistor. However, in either of these cases, inferior thermal response, a long response time, much power consumption for the heating and cleaning operations, and complicated construction are involved, whereby the use of the humidity detector is restricted. The present invention is created to provide a humidity detecting apparatus free from the above described conventional disadvantages.

From US—A—3 961 301 a humidity detecting apparatus is known, disclosing an arrangement in which the humidity detecting element and resistance heating unit are provided with an insulating substrate therebetween so that they may function independently without acting on each other electrically. This known apparatus is of the direct heating type, including some disadvantages such as large power consumption, complicated construction and difficult manufacture.

It is an object of the present invention to provide a humidity detecting apparatus with low power consumption, simple construction, easy manufacture and accurate measurements.

The humidity detecting apparatus according to the present invention is characterised in that a plate-like humidity detecting resistor ceramic element is provided with first and second plate measuring electrodes on opposite major surfaces of said element and that at least one part of a measuring electrode provided on a major surface at one side of the humidity detecting resistor ceramic element is arranged to serve as the resistance heating unit.

Per se a humidity detecting apparatus is known from FR—A—2 336 777, in which the humidity detecting resistor is used as a thermistor for controlling the heating and cleaning process.

These and other objects, features, aspects and advantages of the present invention will become more apparent from the following detailed description of the present invention when taken in conjunction with the accompanying drawings, in which:

Fig. 1 is a perspective view of a humidity detecting element,

Fig. 2 is a humidity detection characteristic graph of the humidity detecting element of Fig. 1,

Fig. 3 is an electric circuit diagram showing an embodiment of a humidity detecting apparatus according to the invention, and

Fig. 4 shows another embodiment of a humidity detecting apparatus similar to Fig. 3.

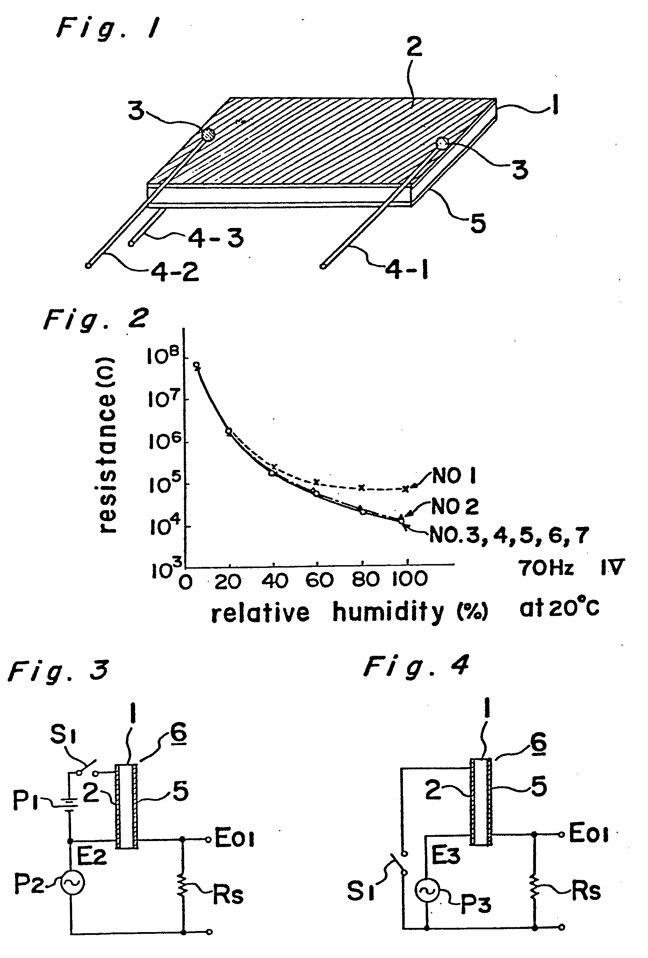

$Cr_2O_3$, $TiO_2$ and MgO each being 99.99% or more in purity are used as starting raw materials for the humidity detecting material to be blended into the composition ratio of MgO 65 by mol, $Cr_2O_3$ 65 by mol and $TiO_2$ 35 by mol. These blended materials were wet-mixed by a polyethylene pot with agate balls therein and were dried. Thereafter, they were molded in a square plate of 5×4×0.25 mm under a pressure of 73,5 $N/mm^2$, and the resultant molding was fired in air for two hours at 1,350°C to make such a humidity detecting resistor ceramic element 1 as shown in Fig. 1. Then, a resistance heating unit of $RuO_2$ series paste was applied on the faces of the ceramic element 1 and was fired at 800°C to form electrodes 2 and 5 on the major surfaces. Thereafter, lead wires 4—1, 4—2 and 4—3 each being made of Pt 90% and Ir 10% alloy of 0.1 mm in diameter were fired at 800°C, with the $RuO_2$ series paste 3, respectively, applied at the edges on the face of the electrode 2 and at one edge on the face of the electrode 5, and a humidity detecting unit comprising the detecting resistor ceramic element was obtained. Various humidity detecting resistor ceramic elements each having a face resistance are described in Table 1. The respective specimens shown in Table 1 are shown as a graph of Fig. 2 in terms of humidity resistance characteristics.

TABLE 1

| Specimen No. | Face resistance ($\Omega/\square$) of resistance heating unit |
|---|---|
| 1 | 100 K |
| 2 | 10 K |
| 3 | 1 K |
| 4 | 100 |
| 5 | 10 |
| 6 | 1 |
| 7 | 0.1 |

Table 1 shows the relationship between the face resistance of the resistance heating unit of the humidity detecting resistor ceramic element and the specimens. Fig. 2 shows the characteristics of electric resistances (1V—70Hz) between electrodes 4—2 and 4—3 shown in Fig. 1 of the specimens shown in Table 1 when the relative humidity has been varied. The specimens of Nr. 2 through Nr. 7 almost fit on one curve, indicating the values of the face resistance do not influence on the humidity detecting resistor.

However, as the face resistance is 100k-ohm, i.e. No. 1 specimen, the sensitivity is affected by the value of the face resistance in the high humidity range. It is found that the saturation is due to the unbalanced value of the face resistance regarding the humidity detecting resistance. If the value of the face resistance is comparable with or less than the humidity detecting resistance, the response curve of the resistance on the humidity does not show any saturation effect even at the high humidity range. In practice, the value of the humidity detecting resistance, in order to set the value of the face resistance, is usually taken at the highest humidity in the detection. Also, in the No. 7 specimen, the temperature distribution is extremely worse in the central portion and end portions of the specimen when the heating and cleaning operations of the humidity resistor ceramic element are done. When the humidity detecting resistor ceramic element was contaminated with organic gases such as oil-component gases, the heating and cleaning operations were performed through the current flowing into the resistance heating unit, thus resulting in producing some portions heated and cleaned and other portions not heated and cleaned. This is because the temperature distributing condition is considered to become deteriorated due to Joule's heat when the resistances caused in the lead wire mounting portions of the resistance heating unit are higher than the resistance value of the resistance heating unit. If the value of the face resistance is very low, e.g. less than 1 $\Omega/\square$, the humidity detecting element is not uniformly heated, there is some temperature difference between the center and edges of the element, because the contact resistance of the electrodes to the face resistance becomes to an appreciable value regarding the value of the face resistance. The non-uniform heating results in peeling-off the face resistance layer from the humidity detecting element.

As described hereinabove, the present invention recommends an element wherein at least one portion of an electrode disposed on the humidity detecting resistor ceramic element is composed of a resistance heating unit and the electrode serves as the resistance heating unit and the humidity detecting electrode. The humidity detection uses the characteristics, i.e., relative humidity-resistance characteristics between the lead terminals 4—2 and 4—3. The heating and cleaning operations are performed while the current is flowing between the lead terminals 4—1 and 4—2.

As the humidity detecting resistor element, metallic oxide series is provided. The metallic oxide series is considerably stable, including the heat resisting property, since the ceramic types can be easily provided due to recent ceramic techniques. If oils, dusts or the like are absorbed and adhered upon the humidity detecting resistor element, the heating operation to temperatures of approximately 400°C or more easily removes them.

In addition to the elements described in the above embodiment as the humidity detecting resistor ceramic element of the present invention, among the metallic oxides series, metallic oxides containing at least one component selected from a group of $Cr_2O_3$, $Fe_2O_3$, NiO, ZnO, $SnO_2$, $TiO_2$, $Al_2O_3$, MgO, $In_2O_3$, $MnO_2$, CuO, CoO, $MgCr_2O_4$, $FeCr_2O_4$, $NiCr_2O_4$, $MnCr_2O_4$, $CuCr_2O_4$, $CoCr_2O_4$, $Zn_2TiO_4$, $Zn_2SnO_4$, $Mg_2TiO_4$, $Mg_2SnO_4$, $BaTiO_3$, $PbZrO_3$, $CaTiO_3$, $KNbO_3$, $KTaO_3$, $PbTa_2O_6$, $NaNbO_3$, $LiNbO_3$, $LiTaO_3$, $PbHfO_3$, $BaTiO_3$, $SrTiO_3$ and components represented in $ABO_3$, wherein A is Pb, B indicates either one of $(Mg_{1/2}W_{1/2})$, $(Cd_{1/2}W_{1/2})$, $(Co_{1/2}W_{1/2})$, $(Sc_{1/2}Nb_{1/2})$, $(Fe_{1/2}Nb_{1/2})$, $(In_{1/2}Nb_{1/2})$, $(Yb_{1/2}Nb_{1/2})$, $(Ho_{1/2}Nb_{1/2})$, $(Fe_{1/2}Ta_{1/2})$, $(Sc_{1/2}Ta_{1/2})$, $(Lu_{1/2}Nb_{1/2})$, $(Lu_{1/2}Ta_{1/2})$, $(Mg_{1/3}Nb_{2/3})$, $Zn_{1/3}Nb_{2/3})$, $(Co_{1/3}Nb_{2/3})$, $(Ni_{1/3}Nb_{2/3})$, $(Mg_{1/3}Ta_{2/3})$, $(Co_{1/3}Ta_{2/3})$, $(Ni_{1/3}Ta_{2/3})$, $(Fe_{2/3}W_{1/3})$ or $(Mn_{2/3}W_{1/3})$, are selected particularly as the preferable ones. These materials, which are thermally stable, are provided with humidity-resistance characteristics across the entire humidity zone, have faster response property, longer service life and reproducing performance through the heating and cleaning operations. In addition, the preferable humidity detecting resistor ceramic elements are a series containing a component 98 to 99.95 by weight composed of $Cr_2O_3$ of 80 to 99.99 by mol and at least one type of 0.01 to 20 by mol selected from a group of $TiO_2$, $ZrO_2$, $HfO_2$, $SnO_2$, $Nb_2O_5$, $Ta_2O_5$, $CeO_2$, $WO_3$, $MnO_2$, $MoO_2$, $DyO_2$, $V_2O_5$, $SiO_2$, $GeO_2$, and at least one type of component 0.05% to 2% by weight selected from a group of BeO, MgO, CaO, SrO, BaO, FeO, NiO, CuO, ZnO, CdO, PbO. Also, ceramics are preferable, containing at least one type of 1 to 99 by mol selected from a group of $MgCr_2O_4$, $FeCr_2O_4$, $NiCr_2O_4$, $CoCr_2O_4$, $MnCr_2O_4$, $CuCr_2O_4$, $Mg_2TiO_4$, $Mg_2SnO_4$, $Zn_2SnO_4$ and at least one type of 1 to 29 by mol selected from a group of $TiO_2$, $ZrO_2$, $HfO_2$ and $SnO_2$. The average air hole diameter of the electrode of resistance heating unit mounted on the humidity detecting resistor ceramic is preferred to be 10 $\mu$ or less. The thickness of the resistance heating unit was preferred to be 0.1 to 50 $\mu$.

In addition, the preferred components for the resistance heating unit are silver, nickel, zinc, chromium, palladium, gold, platinum, tin, aluminium, indium or alloys of these metals, metal oxides having nickel oxide, zinc oxide, indium oxide, ruthenium oxide as major component; and semiconductors.

As described hereinabove, the present invention provides a humidity detecting resistor ceramic element wherein at least one portion of an electrode provided on the humidity detecting resistor element is composed of a resistance heating unit and the electrode serves as the resistance heating unit and the humidity detecting electrode. According to the present invention, the construction of the humidity detecting unit is extremely simplified, and thus the size can be easily made small, resulting in that the thermal capacity becomes small and the thermal response times becomes short. Also, less power consumption will result in the heating and cleaning operations for the humidity detecting unit. Since the resistance heating unit and the humidity detecting apparatus for the humidity detecting resistor porcelain element are used in common, the humidity detecting portion can be uniformly heated, thus ensuring the effectiveness of the cleaning operation. When the humidity detecting resistor ceramic, which is provided on a cooker, becomes dirty, quick heating and cleaning operations can be performed to restore the original humidity detecting property.

As described hereinabove, the humidity detecting resistor ceramic element of the present invention is superior in durability, stably retaining accuracy in heating repetition tests. In addition, since the construction is extremely simplified, the mechanical strength is good and the manufacturing cost is low.

The humidity detecting apparatus using the humidity resistor ceramic element will be described hereinafter. Fig. 3 shows the circuit construction of a humidity detecting apparatus in one embodiment of the present invention, wherein reference numeral 6 is a humidity detector including a humidity detecting resistor ceramic element 1 as mentioned above. A power supply P1 (direct current 5V) for use in the heating and cleaning operation is connected through a switch S1 so that the electric current may be supplied from the power supply P1 to one electrode 2 of the humidity detector 6. One end of a power supply P2 (output voltage E2, 60Hz, 1V) is connected, to the electrode 2 of the humidity detector 6, in common to one end of the power supply P1, and the other end of the power supply P2 is connected to the other electrode 5 of the humidity detector 6 through a resistor Rs (100 KΩ) for output detecting application. Output Eo1 is adapted to be drawn out from both the ends of the resistor Rs. In humidity detecting apparatus of such arrangement, the switch S1 is closed to allow the current to flow along its face, the electrode 2 is heated and the humidity detecting resistor ceramic element 1 is heated and cleaned. The switch S1 is opened to finish the cleaning operation.

The resistance value $((E2-Eo1)Rs/Eo1)$ of the ceramic element 1 is found from the output EO1 drawn out from the ends of the resistor Rs and the relative humidity becomes apparent from the resistance value.

Fig. 4 shows the circuit diagram of a humidity detecting apparatus in another embodiment. In this case, one power supply P3, i.e., output voltage E3 in Fig. 4 serves for the heating and cleaning application and the humidity detecting application, while two power supplies P1 and P2 are used in Fig. 3. In Fig. 4, the same reference numerals are given to the components common in Fig. 3. More specifically, in the arrangement of Fig. 4, the resistor Rs is connected so as to form a closed circuit loop with the humidity detecting resistor ceramic element 1 and the power source P3 for detecting the resistance value in the bulk of the humidity resistor ceramic element 1 to effect the humidity detection.

The humidity detecting apparatus of such constructions as described hereinabove was not deteriorated in performance, since the humidity detecting accuracy was given within $\pm 1\%$ in relative humidity in a test where the heating and cleaning operations (heating power 1.6 watt) were repeated 100,000 times or more.

It is to be noted that a humidity detecting apparatus can provide the same effects so far as the humidity detecting resistor ceramic elements, as described hereinbefore are employed, wherein at least one portion of an electrode provided on a humidity detecting resistor ceramic element is composed of a resistance heating unit, and the electrode serves as said resistance heating unit and a humidity detecting electrode.

Also, in the humidity detecting apparatus, the humidity can be automatically controlled if the controlling system for an air conditioning machine is connected to the output side. The humidity detecting characteristics of the humidity detecting resistor ceramic element and the resistance values of the detecting resistor Rs are properly combined to vary the humidity detecting range. An AC power supply will do as the heating power supply P1 in Fig. 3. Also, the heating resistor constructing the electrode, is required to be designed so that the resistance may become approximately 450°C in temperature rise due to heating.

The humidity detecting unit is extremely simplified in construction and, thus, the size can be easily made small, whereby the thermal capacity thereof becomes small and the thermal response time becomes short in addition to that the power consumed for the heating and cleaning operations can be less. Also, since the humidity detecting resistor ceramic element and the resistance heating unit are integrated as one unit, the humidity detecting portion can be uniformly heated, ensuring facility in the cleaning operation. When the humidity detecting resistor ceramic element, which is provided on the cooker, has become dirty, quick heating and cleaning operations can be performed to reestablish the original humidity detecting characteristics.

The humidity detecting apparatus is good in durability because of the stable retention of the accuracy in the heating repetition tests. Furthermore, since the construction is extremely simplified as described hereinabove, the mechanical strength is good and the manufacturing costs are low.

In the humidity detecting apparatus of the present invention, the power supply for heating operation and humidity detecting operation can be used in common and thus the circuit construction can be simplified.

In the heating and cleaning operation, the thermistor characteristics (400°C to 500°C) of the humidity detecting resistor ceramic element as described hereinbefore may be used to control the heating and cleaning temperatures.

**Claims**

1. A humidity detecting apparatus comprising a humidity detecting resistor element comprising two measuring electrodes, a resistance heating unit covering a substantial part of a major surface of the element and a power source for supplying electric power to said resistance heating unit, characterized in that a plate-like humidity detecting resistor ceramic element is provided with first and second measuring plate electrodes on opposite major surfaces of said element and that at least one part of a measuring electrode (2, 5) provided on a major surface at one side of the humidity detecting resistor ceramic element (1) is arranged to serve as the resistance heating unit.

2. A humidity detecting apparatus according to claim 1, characterized in that the humidity detecting resistor ceramic element (1) is composed of metallic oxide series ceramic.

**Patentansprüche**

1. Feuchtigkeitssensor mit einem Feuchtigkeit erfassenden Widerstandselement, das zwei Meßelektroden, einer den größten Teil einer Hauptfläche des Elements bedeckenden Widerstands-Heizeinheit und einer die Widerstands-Heizeinheit mit elektrischer Energie versorgenden Energiequelle, dadurch gekennzeichnet, daß ein plattenförmiges, die Feuchtigkeit erfassendes Widerstands-Keramikelement mit einer ersten und zweiten Meßplattenelektrode (2, 5) auf gegenüberliegenden Hauptflächen des Elements versehen ist und daß zumindest ein Teil einer auf einer Hauptfläche einer Seite des die Feuchtigkeit erfassenden Widerstands-Keramikelements (1) als Widerstands-Heizeinheit dient.

2. Feuchtigkeitssensor nach Anspruch 1, dadurch gekennzeichnet, daß das die Feuchtigkeit erfassende Widerstands-Keramikelement (1) aus der Reihe der Metalloxid-Keramiken zusammengesetzt ist.

**Revendications**

1. Appareil de détection d'humidité comprenant un élément résistant de détection de l'humidité comportant deux électrodes de mesure, un ensemble de chauffage par résistance recouvrant une partie importante d'une surface principale de l'élément, et une source d'énergie pour l'alimentation en énergie électrique de l'ensemble de chauffage par résistance, caractérisé en ce qu'un élément résistant en céramique de détection de l'humidité ressemblant à une plaque est prévu avec des première et seconde électrodes en plaque de mesure sur des surfaces principales opposées de l'élément, et en ce qu'au moins une partie d'une électrode de mesure (2, 5) prévue sur une surface principale d'un côté de l'élément résistant en céramique (1) est agencée de manière à servir d'ensemble de chauffage par résistance.

2. Appareil de détection d'humidité selon la revendication 1, caractérisé en ce que l'élément résistant en céramique de détection de l'humidité (1) est constitué d'une céramique de la série des oxydes métalliques.

*Fig. 1*

*Fig. 2*

*Fig. 3*

*Fig. 4*